# EUROPEAN PATENT APPLICATION

(11) **EP 3 992 533 A1**
(43) Date of publication of application: **04.05.2022**
(21) Application number: 21205906.7
(22) Date of filing: 02.11.2021
(51) Int. Cl.: F24F 1/0038, F24F 12/00, F24F 7/00

(54) **VENTILATION ARRANGEMENT**

(30) Priority: 02.11.2020 GB 202017356
(71) Applicant: Monodraught Limited, High Wycombe, Buckinghamshire HP12 3SE (GB)
(72) Inventor: HOPPER, Nicholas John, High Wycombe, HP12 3SE (GB); VAZIRIAN, Mohsen, High Wycombe, HP12 3SE (GB)
(74) Representative: Swindell & Pearson Limited

(57) **Abstract**

A ventilation arrangement (400) for ventilating a room by enabling the introduction of external air (202') into the room and recirculation of internal air (901') back into the room, the ventilation arrangement comprising: a plurality of passageways (201-204, 901), wherein each passageway is configured to guide air (201'-204', 901') from an inlet end of each respective passageway to an outlet end of each respective passageway; wherein the plurality of passageways comprises: a first set of one or more passageways (201) for receiving, in use at respective one or more inlet ends, external air (201'), wherein the first set of one or more passageways pass through a heat exchanger (500), a second set of one or more passageways (202) for receiving, in use at respective one or more inlet ends, external air (202'), wherein the second set of one or more passageways do not pass through the heat exchanger, and a third set of one or more passageways (901) for receiving, at respective one or more inlet ends, internal air (901'); wherein a minimum cross-sectional area of the first set of one or more passageways is between 4 to 5.5 times less than a minimum cross-sectional area of the second set of one or more passageways; and wherein a minimum cross-sectional area of the third set of one or more passageways is between 1 to 2 times less than the combination of the minimum cross-sectional area of the first and second sets of one or more passageways.

## Description

### TECHNOLOGICAL FIELD

Examples of the present disclosure relate to a ventilation arrangement for ventilating a room.

### BACKGROUND

The provision of adequate ventilation is an important consideration in building and room design. Typical ventilation devices/units/arrangements enable the introduction of fresh air, i.e. external air/air from the outside environment) into a room and the exhaust of stale air (i.e. internal air/air from inside the room) from the room to the outside environment.

Introducing an airstream of external fresh air directly into a room when the external conditions are cold can cause discomfort to users. To reduce discomfort, and to maintain a desired/required ambient room temperature, either a heater may be provided in the ventilation unit to heat the external fresh air prior to its introduction to the room, or a heater may be provided separately within the room. In either case, there may be an increase in overall heating requirements and energy consumption in maintaining an ambient room temperature at a required/comfortable level.

It is useful to provide an improved ventilation arrangement for ventilating a room in an energy efficient manner.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The scope of protection sought for various embodiments of the invention is set out by the independent claims.
Any examples/embodiments and features described in this specification that do not fall under the scope of the independent claims are to be interpreted as examples useful for understanding various embodiments of the invention.
According to at least some examples of the present disclosure, there is provided a ventilation arrangement for ventilating a room by enabling the introduction of external air into the room and recirculation of internal air back into the room, the ventilation arrangement comprising:
a plurality of passageways, wherein each passageway is configured to guide air from an inlet end of each respective passageway to an outlet end of each respective passageway;
wherein the plurality of passageways comprises:
   a first set of one or more passageways for receiving, in use at respective one or more inlet ends, external air, wherein the first set of one or more passageways pass through a heat exchanger,
   a second set of one or more passageways for receiving, in use at respective one or more inlet ends, external air, wherein the second set of one or more passageways do not pass through the heat exchanger, and
   a third set of one or more passageways for receiving, at respective one or more inlet ends, internal air;
wherein a minimum cross-sectional area of the first set of one or more passageways is between 4 to 5.5 times less than a minimum cross-sectional area of the second set of one or more passageways; and
wherein a minimum cross-sectional area of the third set of one or more passageways is between 1 to 2 times less than the combination of the minimum cross-sectional area of the first and second sets of one or more passageways.
According to various, but not necessarily all, examples of the present disclosure, there is provided a ventilation device or ventilation unit comprising the above ventilation arrangement.
According to various, but not necessarily all, examples of the present disclosure, there is provided a method of providing and/or manufacturing the ventilation arrangement, ventilation device and ventilation unit as described herein.
According to various, but not necessarily all, embodiments there is provided a method of using the ventilation arrangements, devices and units as described herein.

The following portion of this 'Brief Summary' section describes various features that can be features of any of the examples described in the foregoing portion of the 'Brief Summary' section.
In some but not necessarily all examples, the minimum cross-sectional area of the first set of one or more passageways is between 4.5 to 5 times less than a minimum cross-sectional area of the second set of one or more passageways.
In some but not necessarily all examples, the minimum cross-sectional area of the first set of one or more passageways is between 4.8 to 4.9 times less than a minimum cross-sectional area of the second set of one or more passageways.
In some but not necessarily all examples, the minimum cross-sectional area of the third set of one or more passageways is between: 1.25 to 1.75 times less than the combination of the minimum cross-sectional area of the first and second sets of one or more passageways.

In some but not necessarily all examples, the minimum cross-sectional area of the third set of one or more passageways is between: 1.4 to 1.5 times less than the combination of the minimum cross-sectional area of the first and second sets of one or more passageways.
In some but not necessarily all examples, the first and second sets of one or more passageways have respective outlets thereof at one or more mixing chambers of the ventilation arrangement, wherein the one or more mixing chambers are configured to permit air from the first and second sets of one or more passageways to mix together.
In some but not necessarily all examples, the ventilation arrangement is housed in a body and wherein the body has a width: less than 2m, less than 1.5m, less than 1m and/or greater than 0.7m.
In some but not necessarily all examples, the ventilation arrangement is housed in a body and wherein the body has a height: less than 0.6m, less than 0.4m, less than 0.3m and/or greater than 0.2m.
In some but not necessarily all examples, the ventilation arrangement is comprised in a ventilation device or unit, and the ventilation device or ventilation unit is configured to operate in one or more of: a natural ventilation mode, a non-powered mode, and a non-fan assisted mode.
In some but not necessarily all examples, the ventilation arrangement is comprised in a ventilation device or ventilation unit, and the ventilation device or ventilation unit is configured to operate in one or more of: a mechanical ventilation mode, a powered mode, and a fan assisted mode.

### BRIEF DESCRIPTION OF THE DRAWINGS

For a better understanding of various examples of the present disclosure that are useful for understanding the detailed description and certain examples of the present disclosure, reference will now be made by way of example only to the accompanying drawings in which:
FIG. 1 illustrates an example of a ventilation unit according to the present disclosure;
FIG. 2 illustrates differing air passageways through the ventilation unit;
FIG. 3 further illustrates differing air passageways through the ventilation unit;
FIG. 4 illustrates portions of the ventilation unit;
FIG. 5 illustrates air passageways for external/fresh air;
FIG. 6 illustrates varying dimensions of the air passageways for external/fresh air;
FIG. 7 illustrates an air passageway for external/fresh air that does not pass through a heat exchanger/recovery system;
FIG. 8 illustrates an air passageway for external/fresh air that passes through the heat exchanger/recovery system;
FIG. 9 illustrates air passageways for internal air that passes through the heat exchanger/recovery system and an air passageway for recirculating internal air;
FIG. 10 illustrates the air passageways for external fresh air and recirculating internal air; and
FIG. 11 illustrates air passageways for exhausting internal air.

The figures are not necessarily to scale. Certain features and views of the figures may be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

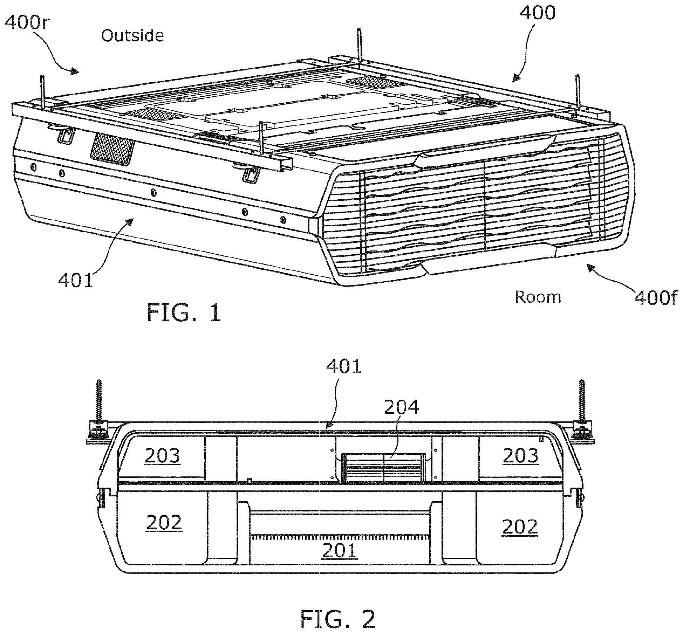

FIG. 1 shows a front perspective view of an example of a ventilation arrangement, such as a ventilation unit/device 400, for ventilating a building interior such as a room by enabling the introduction of fresh/external air into the room and enabling exhausting of stale/internal air from the room.
In the example ventilation unit show, the unit is installed inside a room, not least for example a school classroom. The unit is mounted to a ceiling (e.g. via mounting railings/brackets on an upper side of the unit) of the room and disposed against, proximal or through an external boundary, e.g. wall or window, such that a front end 400f of the unit is located inside the room, i.e. facing a 'Room' direction/towards the inside of the room. The front end defines a fresh external air outlet side of the unit where fresh external air leaves the unit, thereby defining vented air. The rear end of the unit is located externally of the room. The rear end of the unit is thereby outside and exposed a first supply of air, i.e. external fresh air from the external/outside environment. Alternatively, the rear end is coupled to one or more inlets and air ducts for inletting external fresh air to the unit, and one or more outlets and airducts for outletting/exhausting internal stale air from the unit. The rear end defines a fresh/external air inlet side of the unit where the fresh/external air enters the unit. The rear end also defines an outlet side of the unit for exhausting a second supply of air, namely air from inside the room, e.g. stale/internal room air (such stale/internal room air entering the unit via one or more inlet ports located on the portion of the unit that is internal of the room). The rear end faces an 'Outside' direction/towards the outside of the room
The ventilation device 400 comprises a housing body 401, within which a plurality of air passageways are defined. The body may be substantially cuboid in shape, having a length, width and height. In some examples, the body has a width: less than 2m, less than 1.5m, less than 1m and/or greater than 0.7m. in some examples, the body has a height: less than 0.6m, less than 0.4m, less than 0.3m and/or greater than 0.2m.

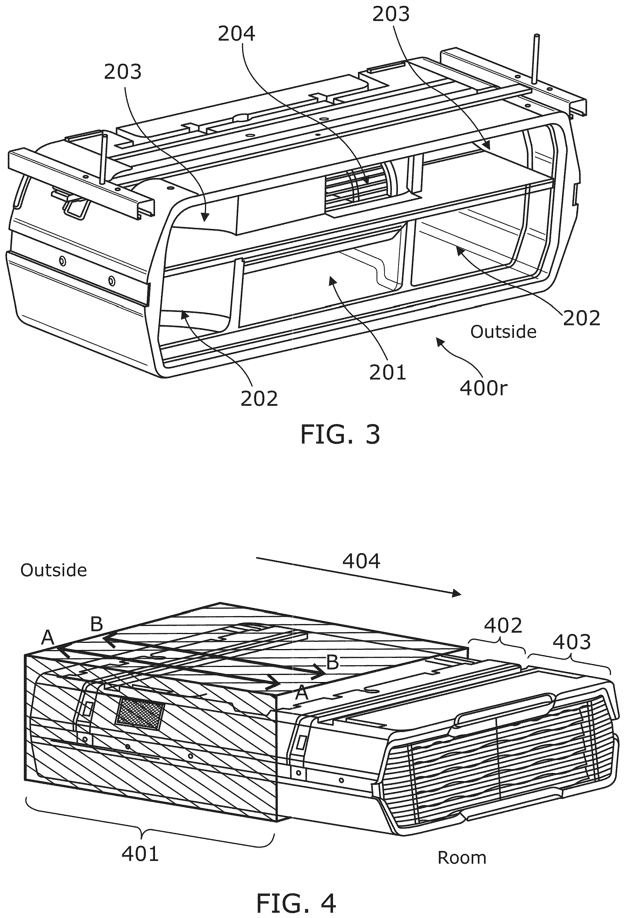

FIG. 2 shows a rear end-one view of the ventilation unit's body 401 and FIG.3 shows a rear perspective cut-through view of the ventilation unit rear section 400r. Both of these FIGs show various air passageways therethrough that guide/funnel airstreams therealong.

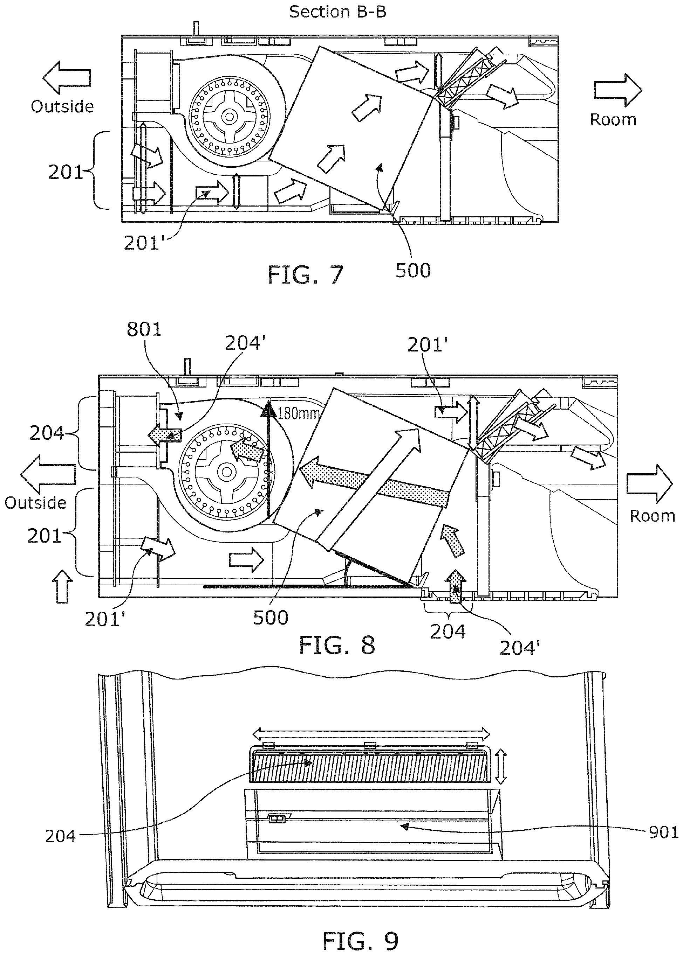

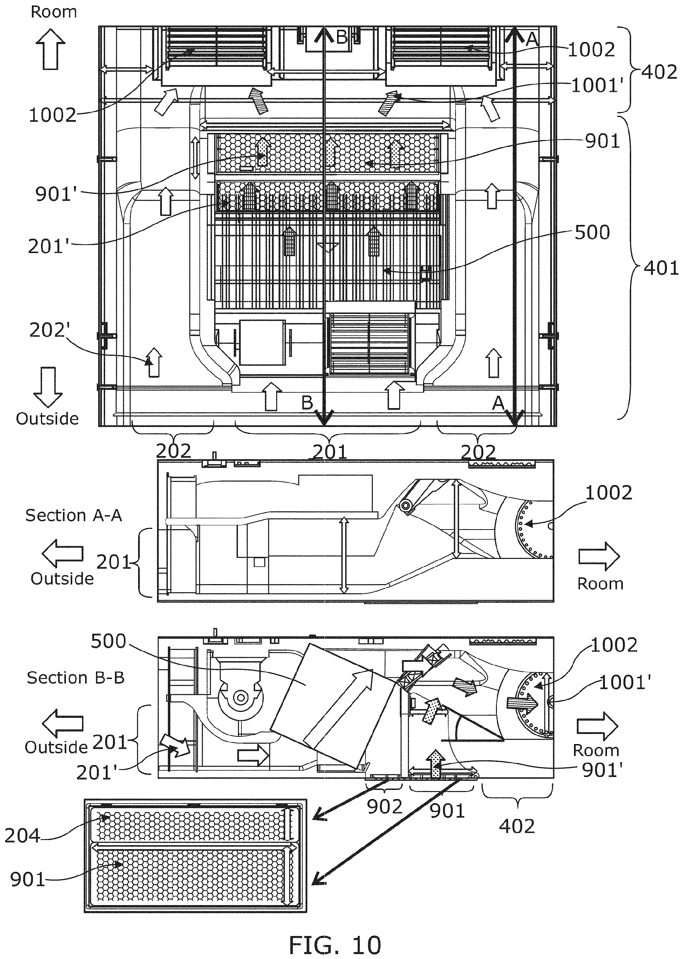

The body of the ventilation unit has a plurality of different passageways. As used herein, the passageways may be: intakes, channels, passages, paths, conduits and/or ducts for differing airstreams/flows of air that pass through the unit. Such differing air streams may comprise:
fresh airstreams, e.g. streams of external air passing through the unit for outletting inside the room,
stale airstreams, e.g. streams of internal air passing through the unit for exhausting/ outletting outside, and
recirculated airstreams, e.g. streams of internal air passing through the unit for outletting inside the room [not shown in FIGs 2 and 4, but shown in FIG. 10].
Each passageway is configured to guide an airflow from a respective inlet end thereof to a respective outlet end thereof.
A first set of passageways 201 may be provided for receiving/inletting, at respective inlet ends thereof (i.e. at the rear end 400r of the unit), fresh/external air, and outletting the fresh/external air at respective outlet ends of the passageways (e.g. as will be discussed in further detail later, a mixing chamber/manifold towards the front end 400f of the unit). This first set of passageways passes through a heat exchanger/heat recovery device. In this regard, a portion of the passageways may themselves form part of the heat exchanger/recovery device. For example, the passageways may be channels/pipes of heat exchanger/recovery device itself. The passages 201 are referred to herein as 'HX Fresh channels' and the airstreams guided therethrough is referred to herein as "HX Fresh airstreams". In the particular example shown in the FIGs, the first set of passageways comprises a single passageway, i.e. a single HX Fresh channel 201.
A second set of one or more passageways 202, in this particular example two passageways, is provided for receiving, at respective inlet ends thereof (at the rear end of the unit), external air and outletting the external air at respective outlet ends of the passageways (e.g. as will be discussed in further detail later, a mixing chamber/manifold towards the front end 400f of the unit). This second set of passageways differs from the first set of passageways in that the second set of passages does not pass through a heat exchanger/heat recovery device. The passages 202 are referred to herein as 'Fresh channels' and the airstream guided therethrough is referred to herein as "Fresh airstream".
A third set of one or more passageways 901 (not shown in FIGs. 2 and 3 but shown and discussed further below with respect to FIGs 9 and 10) are provided for receiving, at respective inlet ends thereof (at a front end of the unit), internal air and outletting the internal air at respective outlet ends of the passageways (e.g. as will be discussed in further detail later, a mixing chamber/manifold towards the front end of the unit). These third set of passageways are referred to herein as 'Recirculation channels' and the airstreams guided therethrough are referred to herein as "Recirculation airstream".

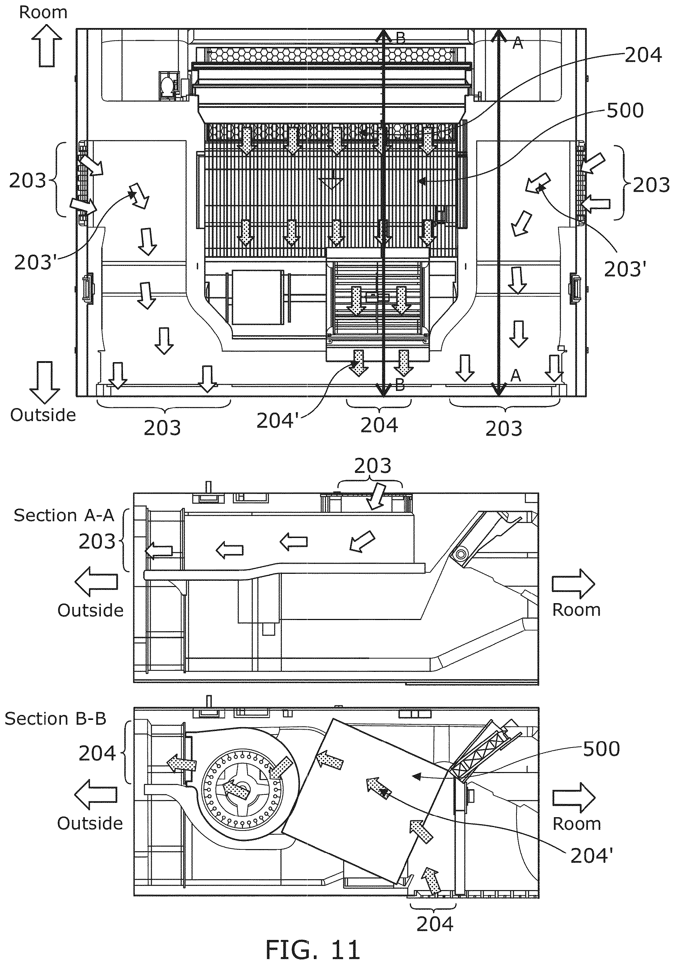

FIGs. 2 and 3 show one or more further passageways 203 are provided for exhausting, at respective outlet ends thereof (at the rear end of the unit), internal/stale air, which enters the passageways at respective inlet ends of the passageways (e.g. as shown in FIG. 11). These passageways do not pass through the heat exchanger. These passageways 203 are referred to herein as 'Exhaust channels' and the airstreams guided therethrough are referred to herein as "Exhaust airstream".
FIGs. 2 and 3 also show one or more further passageways 204 are provided for exhausting, at respective outlet ends thereof (at the rear end of the unit), internal/stale air, which enters the passageways at respective inlet ends of the passageways (e.g. as shown in FIGs. 8 and 11). Unlike the passageways 203, the passageways 204 do pass through the heat exchanger. These passageways 204 are referred to herein as 'HX Exhaust channels' and the airstreams guided therethrough are referred to herein as "HX Exhaust airstreams".
Each of the various passageways/channels is defined by walls thereof that separate one airstream from another. Each of the various passageways/channels has a cross sectional area which may vary along the length of the respective passageway/channel (i.e. from its inlet end to outlet end).
For each passageway, there will be a section thereof that has the lowest cross-sectional area of all the sections along its length (i.e. each passageway comprises a section thereof that has a minimum cross-sectional area for that respective passageway, defining the minimum cross-sectional area of its associated airstream). Accordingly, each passageway (and each associated airstream) will have a minimum cross-sectional area. It is to be appreciated that the position along the length of the ventilation unit where the minimum cross-sectional area of each passageway is need to be the same. For example, the position of the minimum cross-sectional area for the HX Fresh channels is not the same as the position of the minimum cross-sectional area for the Fresh channels.
The first and second sets of channels are configured such that the minimum cross-sectional area of the first set of one or more passageways (i.e. the sum of the minimum cross sectional area of each passageway of the first set) is between 4 to 5.5 times less than the minimum cross-sectional area of the second set of one or more passageways (i.e. the sum of the minimum cross sectional area of each passageway of the second set). In some examples, the first set of one or more passageways comprises all of the HX Fresh channels 201 that pass through the ventilation unit. In some examples, the second set of one or more passageways comprises all of the Fresh channels 202 that pass through the ventilation unit.
With regards to the various differing types of passageways that pass through the ventilation unit (i.e. differing channel types such as: HX Fresh channels 201, Fresh channels 202, Exhaust channel 203, HX Exhaust channels 204, and Recirculation channels 901) the total area of the sum of the minimum cross-sectional areas of all of the HX Fresh channels 201 of the ventilation unit is between 4 to 5.5 times less than the total area of the sum of the minimum cross-sectional areas of all of the Fresh channels 201 of the ventilation unit.
With regards to FIG. 2's two Fresh HC channels and two Fresh channels:
MCSA(HX Fresh channel) is between 4 to 5.4 times less than MCSA(Fresh channel) where MCSA(channel type) = total/sum of minimum cross-sectional areas of each channel of the channel type

This equates to a ratio values of MCSA(HX Fresh):MCSA(Fresh) between 4:1 and 5.5:1
In some examples, the minimum cross-sectional area of the first set of one or more passageways is between 4.5 to 5 times less than a minimum cross-sectional area of the second set of one or more passageways. This equates to a ratio values of MCSA(HX Fresh):MCSA(Fresh) between 4.5:1 and 5:1
In some examples, the minimum cross-sectional area of the first set of one or more passageways is between 4.8 to 4.9 times less than a minimum cross-sectional area of the second set of one or more passageways. This equates to a ratio values of MCSA(HX Fresh):MCSA(Fresh) between 4.8:1 and 4.9:1

Furthermore, the first, second and third sets of channels are configured such that the minimum cross-sectional area of the first and second sets of one or more passageways 201, 203 is between 2 to 1 times greater than the minimum cross-sectional area of the third set of one or more passageways 901.
In some examples, the third set of one or more passageways comprises all of the Recirculation channels 901 that pass through the ventilation unit. The total area of the sum of the minimum cross-sectional areas of all of the HX Fresh channels 201 and all of the Fresh Channels 202 of the ventilation unit is between 2 to 1 times greater than the total area of the sum of the minimum cross-sectional areas of all of the Recirculation channels 901 of the ventilation unit.
In other words, MCSA(HX Fresh + Fresh) is between 1 to 2 times greater than MCSA(Recirculation channel)
where MCSA(channel type) = total/sum of minimum cross-sectional areas of each channel of the channel type
This equates to a ratio values of MCSA(HX Fresh + Fresh):MCSA(Recirculation) between 1:1 and 1:2
In some examples, the minimum cross-sectional area of the first and second sets of one or more passageways is between 1.25 to 1.75 times greater than the minimum cross-sectional area of the third set of one or more passageways. This equates to a ratio values of MCSA(HX Fresh + Fresh):MCSA(Recirculation) between 1:1.25 and 1:1.75.
In some examples, the minimum cross-sectional area of the first and second sets of one or more passageways is between 1.4 to 1.5 times greater than the minimum cross-sectional area of the third set of one or more passageways. This equates to a ratio values of MCSA(HX Fresh + Fresh):MCSA(Recirculation) between 1:1.4 and 1:1.5.

The various passageways, and their associated airstreams, of the ventilation unit will now be described in further detail and shown with regards to FIGs 4 - 12.
FIG. 4 illustrates a rear portion 401, an intermediary portion 402 and a front portion 403 of the ventilation unit. The first and second sets of passageways (i.e. the HX Fresh channel and Fresh channel) are defined as inlets/passages/channels/walls of the rear portion (referred to as an uplet section of the unit) that lead up to the intermediary portion 402 (referred to as the mixing section of the unit). The outlet ends of the first, second and third passageways are located at the intermediate portion. These passageways outlet to a chamber of the intermediate portion where the respective airstreams (i.e. the HX Fresh airstream, Fresh airstream and Recirculation airstream) from the passageways meet, join, and mix together prior to being urged, via one or more fans of the intermediate portion, out of the intermediate portion for outlet from the ventilation unit into the room via the front portion (referred to as a downlet section). In such a manner, the ventilation unit provides mixed air ventilation.
As will be discussed below, since the HX Fresh airstream passes through a heat exchanger and is thereby heated up, the warm HX Fresh airstream mixed with the Fresh airstream thereby warms/tempers the Fresh airstream (reducing the need for the tempered fresh air to be further and/or actively heated). Furthermore, as will be discussed below, Fresh airstream and warm HX Fresh airstream are further mixed with the warm Recirculated airstream (comprising warm internal air) thereby further warming/tempering the Fresh airstream and HX Fresh airstream (reducing the need for the tempered fresh air to be further and/or actively heated) saving in both heating energy requirements for the room as well as discomfort for room occupants who may be in the path of un-warmed fresh airstreams.
The front portion comprises movable air blades/vents/louvres that are controllable to adjust the direction of the vented airstream (comprising the mixed HX Fresh airstream and Fresh airstream).

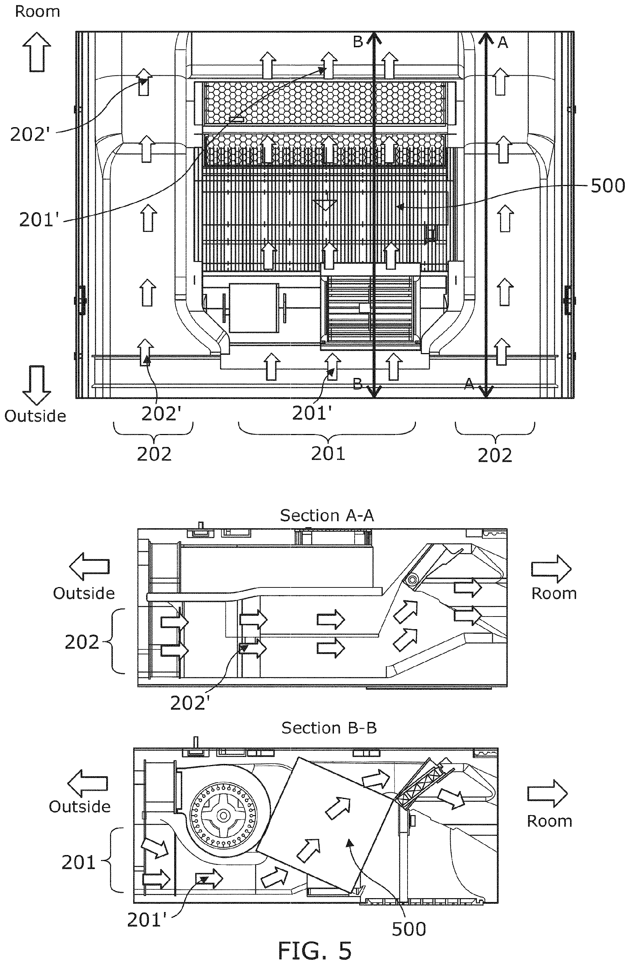

FIG. 4 also indicates lines A-A and B-B of the rear portion 401 that are referred to in the cross-sectional views of FIG. 5. These lines extend in a direction parallel to a body axis of 404 of the ventilation unit (which, typically in use, would be horizontally aligned).

FIG. 5 illustrates various cross-sectional views of the rear portion 401 of the ventilation unit of FIG. 4 showing the air passageways 201 and 202 for external/fresh air as well as their associated airstreams 201' and 202'.
The upper drawing shows a cross-sectional cut-through of the rear portion of the ventilation unit from a plan view perspective. This drawing illustrates the air passageway 201 and its air stream 201' (i.e. the HX Fresh channel 201 and its HX Fresh airstream 201'). This drawing also illustrates the air passageways 202 and their respective air streams 202' (i.e. the Fresh channels 202 and their Fresh airstreams 202').
The lower drawing shows a cross-sectional cut-through of the rear portion of the unit from a side on view perspective along the line B-B. As schematically shown in this drawing, the air passageway 201 guides the airstream 201' of external/fresh air from an inlet end thereof to an outlet end thereof via a heat exchanger/recovery system 500.
The middle drawing shows a cross-sectional cut-through of the rear portion of the unit from a side on view perspective along the line A-A. As shown in this drawing, the air passageway 202 guides the airstream 202' of external/fresh air from an inlet end thereof to an outlet end thereof via route through the unit that does not pass through the heat exchanger/recovery system.

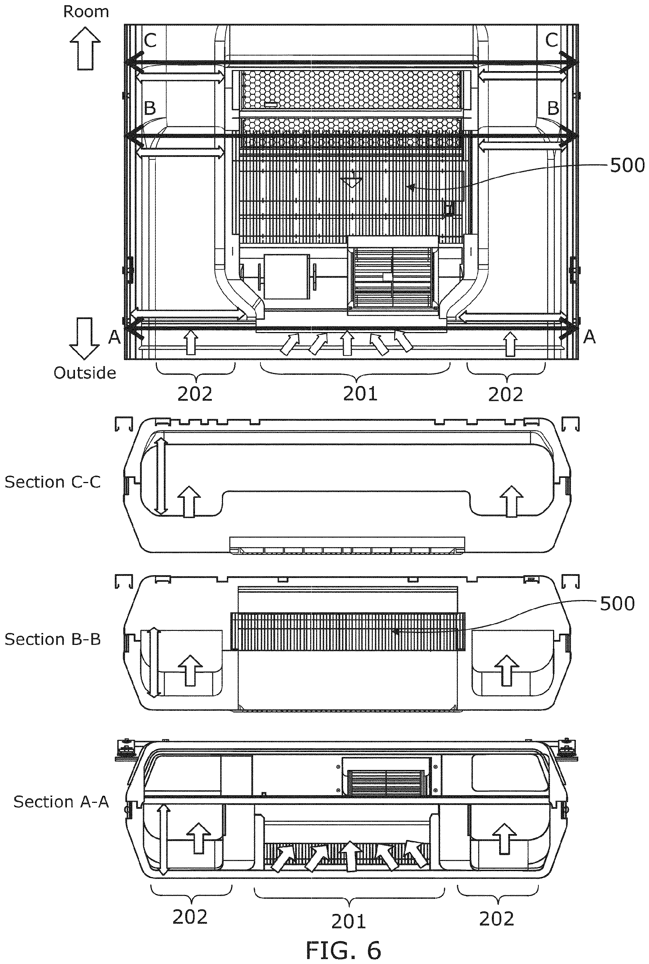

FIG. 6 illustrates various cross-sectional views (similar to that of FIG. 5) of the rear portion 401 of the ventilation unit showing the varying dimensions of the air passageways 202 (i.e. the Fresh channel) along its length.
The upper drawing shows a cross-sectional cut-through of the rear portion of the unit from a plan view perspective. This drawing illustrates the varying lateral dimension of each of air passageway 202 (i.e. the varying width of the Fresh channels).
The other drawings of FIG. 6 show the varying vertical dimension of each of the air passageways 202 along its length (i.e. the varying height of the Fresh channels).
Due to the varying dimensions (in both width and height) along the length of each passageway, the cross-sectional area of each passageway varies along its length. Each Fresh channel thus has a minimum cross-sectional area.

FIG. 7 illustrates a cross-sectional view (similar to that of the lower drawing of FIG. 5) of the rear portion 401 of the ventilation unit of FIG. 4 showing the varying dimensions, e.g. height, of the air passageway 201 (i.e. the HX Fresh channel) along its length.
Due to the varying dimensions (in both width and height) along the length of the passageway, the cross-sectional area of the passageway varies along its length. Each HX Fresh channel thus has a minimum cross-sectional area.
The HX Fresh channel 201 and Fresh channels 202 are configured such that:
the cross-sectional area of the HX Fresh channel is between: 4 to 5.5, 4.5 to 5, or 4.8 to 4.9 times less than a total minimum cross-sectional area of both the Fresh channels.

FIG. 8 illustrates a cross-sectional view (similar to that of FIG. 7) of the rear portion 401 of the ventilation unit showing the operation of the heat exchanger 500. An inlet side of the airway passage 204 (i.e. the HX exhaust channel 204) is defined by an inlet port on the ventilation device which is disposed on a lower surface of the ventilation unit (though in other examples it could be positioned elsewhere, e.g. on a differing side/surface of the ventilation unit). The inlet port is positioned on the ventilation unit such that, when installed and in use in a room, the inlet port is inside the room. The inlet port, in use, receives warm/stale/ internal room air which is guided along the air passageway 204 through the heat exchanger 500 and out, via fan 801, through the passageway's outlet port which is disposed on a rear end of the ventilation unit, as shown in FIGs 2 and 3. The heat exchanger is configured such that the airstream 204', i.e. HX exhaust airstream, conveys some of its heat to the HX Fresh airstream 201' of the HX Fresh channel thereby heating up the external fresh air of the HX fresh channel prior to it being mixed with other airstreams and introducing into the room - thereby reducing the need to actively heat up the fresh air and saving heating energy requirements.

FIG. 9 illustrates a bottom view of a lower surface of the ventilation unit and shows the inlet port for the air passageway 204, i.e. the inlet port for the HX exhaust channel.
Also shown is a further inlet port for a further channel 901, referred to herein as Recirculation channel, for recirculating warm interior room air, referred to herein as Recirculation airstream, back into the room. In other examples, the inlet port for the Recirculation channel could be positioned elsewhere, e.g. on a differing side/surface of the ventilation unit.

FIG. 10 illustrates various cross-sectional views of the rear portion 401 and intermediate portion 402 of the ventilation unit, showing the air passageways 201 and 202 for external/fresh airstreams 201' and 202' (i.e. the HX Fresh and Fresh channels along with their respective airstreams HX Fresh and Fresh airstreams) as well as the air passageway 901 for recirculated airstream 901' (i.e. the Recirculation channel and its Recirculation airstream). All of these passageways outlet their respective airstreams into the intermediate portion in order to be joined/mixed together prior to such mixed air/ventilation airstream 1001' being urged out of the ventilation unit by fans 102 through the front end portion of the ventilation unit (not shown).
The upper drawing shows a cross-sectional cut-through of the rear and intermediate portions of the ventilation unit from a plan view perspective. This drawing illustrates the air passageways 201, 202 and 901 and their respective air streams 201', 202' and 901' (i.e. the HX Fresh and Fresh channels 201 and 202 and their HX Fresh and Fresh airstreams 201' and 202' as well as the Recirculation channel 901 and its Recirculation airstream 901'). This drawing shows the various air passageways outletting to a mixing chamber/manifold in the intermediate section where the various airstreams join/mix. The relatively warm HX Fresh airstream 201' tempers the Fresh airstream 202 202' and yet warmer Recirculation airstream 901' further tempering/warming both the HX Fresh and Fresh airstreams prior to the mixed airstreams 1001' being vented from the unit.
As will be discussed further below, due to the specifically configured relative sizes/ratios of the various air passageways, when account is taken for typical sources of heat within a typical room during normal use (e.g. due to occupants, lighting, IT devices) the vented air within the room would be further heated by such additional heat sources such that during use, no further heating of the vented air and/or room may be required.
The lower drawing shows a cross-sectional cut-through of the rear and intermediate portions of the unit from a side on view perspective along the line B-B. As shown in this drawing, the air passageway 201 guides the airstream 201' of external/fresh air from an inlet end thereof to an outlet end thereof via the heat exchanger/recovery system 500, following which it mixes with the airstream 901' of the Recirculation channel. This figure shown the varying dimensions of the air passageway 901. The air passageway 901 thereby has a minimum cross-sectional area.
The airstream 901' comprises warm internal room air inlet at the recirculation channel's inlet end at a lower surface of the ventilation unit, which is guided along by the recirculation channel and outlet at its outlet end at the mixing chamber, whereupon it can mix with the HX Fresh airstream (and the Fresh airstream - not shown) prior to being urged by the fan 1002 out of the front portion of the ventilation unit.
The middle drawing shows a cross-sectional cut-through of the rear and intermediate portions of the unit from a side on view perspective along the line A-A. The air passageway 202 guides its Fresh airstream (not shown) from an inlet end thereof to an outlet end thereof, without passing through the heat exchanger/recovery system, to the mixing chamber prior to the fan 1002 whereupon it can mix with the HX Fresh airstream and the Recirculation airstream (not shown) prior to being urged by the fan 1002 out of the front portion of the ventilation unit.
The outlet end of the recirculation channel 901 is located at the intermediate portion. The recirculation channel 901 outlets to a chamber of the intermediate portion where the HX Fresh airstream and the Fresh airstream also outlet to. Accordingly, the recirculation airstream meets, joins, and mixes together with the HX Fresh and Fresh airstreams prior to being urged, via one or more fans of the intermediate section, to the front section for outlet from the ventilation unit into the room via the front portion/ downlet section. Since the recirculation airstream comprise warm room air, when mixed with the HX Fresh and Fresh airstreams it thereby warms them up/tempers them thereby reducing the need for the HX Fresh and Fresh airstreams to be further and/or actively heated.
The dimensions, e.g. width and/or height, of the air passageway 901 (i.e. Recirculation channel) along its length. Due to the varying dimensions (in both width and height) along the length of the passageway, the cross-sectional area of the passageway varies along its length. The Recirculation channel thus has a minimum cross-sectional area.
The Recirculation channel 901 (and the HX Fresh channel 201 and Fresh channels 202) are configured such that:
the cross-sectional area of the Recirculation channel is between: 1 to 2, 1.27 to 1.75, or 1.4 - 1.5 times less than a total minimum cross-sectional area of both the HX Fresh and Fresh channels.
In one particular example:
the minimum cross-sectional area of the Recirculation channel = 415 cm²
the total minimum cross-sectional area of the HR Fresh and each of the Fresh channels = 105 cm² + 252 cm² + 252 cm² = 609 cm²
the ratio of Recirculation channel minimum cross-sectional area : HX Fresh + Fresh channels' minimum cross-sectional area = 1.5 : 1.

Due to the varying dimensions (in both width and height) along the length of the passageway, the cross-sectional area of the passageway varies along its length. Each HX Fresh channel thus has a minimum cross-sectional area.
The HX Fresh channel 201 and Fresh channels 202 are configured such that:
the cross-sectional area of the HX Fresh channel is between: 4 to 5.5, 4.5 to 5, or 4.8 to 4.9 times less than a total minimum cross-sectional area of both the Fresh channels.
In one particular example ventilation unit with two Fresh channels and a single HX Fresh channel:
the minimum cross-sectional area of the Fresh channels = 252 cm² each
the minimum cross-sectional area of the HX Fresh channel = 105 cm²
the ratio of HX Fresh channel minimum cross-sectional area : Fresh channel minimum cross-sectional areas = 4.8 : 1.

Advantageously, the inventors have found that the above described ratios of cross-sectional areas for the differing types of air passageways/air intakes (i.e. HX Fresh channel: Fresh channel; as well as recirculation channel: HX Fresh + Fresh channels) gives rise to optimal ventilation performance for certain typical usage conditions (not least with regards to use in school classrooms), in particular with regards energy efficiency (and optimal Specific Fan Power (SFP) values), as well as required fresh air ventilation rate and acceptable levels of Indoor Air Quality (IAQ).

The following calculation illustrates an example of a typical use setup, namely a school classroom, for a ventilation device according to the present disclosure having:
a ratio of minimum cross-sectional area of HX Fresh channel : Fresh channel of approximately 4.8:1, and
a ratio of minimum cross-sectional area of recirculation channel : (total HX Fresh channel + Fresh channel) of approximately 1.2:1.

| | | |
|---|---|---|
| Number of room occupants (30 students, teacher and teaching assistant) | | = 32 |
| Required fresh air ventilation rate @ 5l/s per person | | = 160 l/s |
| Occupancy heat gains @ 70W per person | | = 2.24 kw |
| Lighting electrical gains @ 8W per m² (conservative figure for LED lighting) | | = 0.44 kW |
| IT electrical gains @ 10W per m² (conservative figure for IT equipment, e.g. computers, screens ...) | | = 0.55 kW |
| Normally maintained room temperature | | = 20°C |
| Winter design condition (i.e. lowest assumed outdoor winter temperature the ventilation unit is optimally designed for) | | = -1°C |
| Heat Exchanger efficiency | | = 41% |
| Fabric heat loss to façade (e.g. external wall) | | = 0.8 kW |
| Based on the above parameter values for typical usage, an air volume output | | =0.16m³/s, temperature difference = 21 and assuming an air density of 1.225 kg/m³: |
| | Ventilation heat loss duty | = 4.12 KW |
| | Less heat exchanger efficiency | = -1.69 kW |
| | Less dynamic electrical heat gains | = 0.99 kW |
| | Less occupancy heat gain | = 2.24 kw |
| | Plus fabric heat loss | = - 0.8 kW |
| | **Total Heat Load required by Winder Design conditions** | **= 0 kw** |

Hence, when operating under such winter conditions, a ventilation device in accordance with examples of the present disclosure may provide fresh air ventilation operating in such winter conditions that obviates the need for additional heat load, i.e. avoids, or at least reduce, the need for applying active heating to the room/air. Thus, examples may reduce the need to additional heaters/ heat emitters and hence may reduce energy consumption thereby providing a more efficient and improved ventilation device.

FIG. 11 illustrates various cross-sectional views of the rear portion of the ventilation unit, showing the air passageways 203 and 204 for stale/internal room/stale airstreams 203' and 204' (i.e. the Exhaust channel 203 and HX Exhaust channel 204 along with their respective Exhaust airstreams 203' and HX Exhaust airstream 204'). All of these passageways outlet their respective airstreams out of the rear end portion of the ventilation unit to the outside/external atmosphere.
The upper drawing shows a cross-sectional cut-through of the rear portion of the ventilation unit from a plan view perspective. The middle and lower drawings show cross-sectionals cut through side on views along the lines A-A and B-B. These drawing shows the Exhaust channels 203 inletting warm/stale internal room air which is guided through the ventilation unit, without passing through the heat exchanger 500, out of the ventilation unit at a rear end thereof. Whereas the HX Exhaust channel 204 inlets warm/stale internal room air which is guided through the ventilation unit and passes through the heat exchanger 500 (imparting some of its heat to the HX Fresh airstream), and then continues out of the ventilation unit at a rear end thereof.
The ventilation unit is configurable to operate in either a natural ventilation mode or a mechanical ventilation mode. The natural ventilation mode relates to a non-powered mode of operation, i.e. wherein there is no mechanical or fan assisted urging of the movement of airstreams. In this regard, various of the passageways, e.g. the external fresh air passageways 202 may be configured to function (e.g. via their shape, contours and unimpeded route [e.g. not through a heat exchanger] through the ventilation unit) to draw in external air and outlet the same into the room, without requiring fan assistance. Likewise, the internal air passageways 203 may be configured to function (e.g. via their shape, contours and unimpeded route [e.g. not through a heat exchanger] through the ventilation unit) to draw in internal air from the room and outlet the same outside, without requiring fan assistance. The mechanical ventilation mode relates to a powered mode of operation, e.g. wherein one or more means for moving air, e.g. fans 801 and 1002, are used to draw in and/or expel air.
In such a manner, the ventilation unit may be a hybrid ventilation unit in that it can function as a natural ventilation device as well as mechanical ventilation device.

Although specific terms are employed herein, they are used in a generic and descriptive sense only and not for purposes of limitation. Features described in the preceding description can be used in combinations other than the combinations explicitly described. Although functions have been described with reference to certain features, those functions can be performable by other features whether described or not. Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent. Although various examples of the present disclosure have been described in the preceding paragraphs, it should be appreciated that modifications to the examples given can be made without departing from the scope of the invention as set out in the claims. For example, whilst sinusoidal shapes have been disclosed, it is to be appreciated that other shapes could be used, e.g. saw-tooth, top-hat, rectilinear or other non-non-curved shapes (whether periodic/repeating or not).
The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".
In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.
In this description, references to "a/an/the" [feature, element, component, means ...] are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning.
The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.
In this description, reference has been made to various examples using adjectives or adjectival phrases to describe characteristics of the examples. Such a description of a characteristic in relation to an example indicates that the characteristic is present in some examples exactly as described and is present in other examples substantially as described.
Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.
The examples of the present disclosure and the accompanying claims can be suitably combined in any manner apparent to one of ordinary skill in the art.
Each and every claim is incorporated as further disclosure into the specification and the claims are embodiment(s) of the present invention. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A ventilation arrangement for ventilating a room by enabling the introduction of external air into the room and recirculation of internal air back into the room, the ventilation arrangement comprising:
a plurality of passageways, wherein each passageway is configured to guide air from an inlet end of each respective passageway to an outlet end of each respective passageway;
wherein the plurality of passageways comprises:
a first set of one or more passageways for receiving, in use at respective one or more inlet ends, external air, wherein the first set of one or more passageways pass through a heat exchanger,
a second set of one or more passageways for receiving, in use at respective one or more inlet ends, external air, wherein the second set of one or more passageways do not pass through the heat exchanger, and
a third set of one or more passageways for receiving, at respective one or more inlet ends, internal air;
wherein a minimum cross-sectional area of the first set of one or more passageways is between 4 to 5.5 times less than a minimum cross-sectional area of the second set of one or more passageways; and
wherein a minimum cross-sectional area of the third set of one or more passageways is between 1 to 2 times less than the combination of the minimum cross-sectional area of the first and second sets of one or more passageways.

2. The ventilation arrangement of claim 1, wherein the minimum cross-sectional area of the first set of one or more passageways is between 4.5 to 5 times less than a minimum cross-sectional area of the second set of one or more passageways.

3. The ventilation arrangement of any previous claim, wherein the minimum cross-sectional area of the first set of one or more passageways is between 4.8 to 4.9 times less than a minimum cross-sectional area of the second set of one or more passageways.

4. The ventilation arrangement of any previous claim, wherein the minimum cross-sectional area of the third set of one or more passageways is between: 1.25 to 1.75 times less than the combination of the minimum cross-sectional area of the first and second sets of one or more passageways.

5. The ventilation arrangement of any previous claim, wherein the minimum cross-sectional area of the third set of one or more passageways is between: 1.4 to 1.5 times less than the combination of the minimum cross-sectional area of the first and second sets of one or more passageways.

6. The ventilation arrangement of any previous claim, wherein the first and second sets of one or more passageways have respective outlets thereof at one or more mixing chambers of the ventilation arrangement, wherein the one or more mixing chambers are configured to permit air from the first and second sets of one or more passageways to mix together.

7. The ventilation arrangement of any previous claim, wherein the ventilation arrangement is housed in a body and wherein the body has a width:
less than 2m, less than 1.5m, less than 1m and/or greater than 0.7m.

8. The ventilation arrangement of any previous claim, wherein the ventilation arrangement is housed in a body and wherein the body has a height:
less than 0.6m, less than 0.4m, less than 0.3m and/or greater than 0.2m.

9. A ventilation device or ventilation unit comprising the ventilation arrangement of any of the previous claims.

10. The ventilation device or ventilation unit of claim 9, wherein the ventilation device or ventilation unit is configured to operate in one or more of: a natural ventilation mode, a non-powered mode, and a non-fan assisted mode.

11. The ventilation device or ventilation unit of claim 9 or 10, wherein the ventilation device or ventilation unit is configured to operate in one or more of: a mechanical ventilation mode, a powered mode, and a fan assisted mode.
